(19) Europäisches Patentamt
European Patent Office
Office européen des brevets

(11) **EP 4 746 307 A1**

(12) **EUROPEAN PATENT APPLICATION**
published in accordance with Art. 153(4) EPC

(43) Date of publication:
**20.05.2026 Bulletin 2026/21**

(21) Application number: **24840027.7**

(22) Date of filing: **08.07.2024**

(51) International Patent Classification (IPC):
**H04B 7/06** (2006.01)   **H04W 72/0446** (2023.01)
**H04W 72/044** (2023.01)   **H04W 24/08** (2009.01)
**H04W 72/231** (2023.01)   **H04W 72/232** (2023.01)
**H04L 5/00** (2006.01)   **G06N 20/00** (2019.01)

(52) Cooperative Patent Classification (CPC):
**G06N 20/00; H04B 7/06; H04L 5/00; H04W 24/08; H04W 72/044; H04W 72/0446; H04W 72/231; H04W 72/232**

(86) International application number:
**PCT/KR2024/009649**

(87) International publication number:
**WO 2025/014215 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 KR 20230090077**

(71) Applicant: **LG Electronics Inc.**
**Yeongdeungpo-gu**
**Seoul 07336 (KR)**

(72) Inventors:
• **KANG, Jiwon**
  **Seoul 06772 (KR)**
• **GO, Seongwon**
  **Seoul 06772 (KR)**
• **KIM, Kijun**
  **Seoul 06772 (KR)**
• **KIM, Hyungtae**
  **Seoul 06772 (KR)**
• **PARK, Haewook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR PERFORMING DOWNLINK TRANSMISSION AND RECEPTION IN WIRELESS COMMUNICATION SYSTEM**

(57)    A method and an apparatus for performing downlink transmission and reception in a wireless communication system are disclosed. The method performed by a terminal, according to one embodiment of the present disclosure, may comprise the steps of: receiving, from a base station, first information related to a first resource for a physical channel or signal and second information related to a first spatial filter or first transmission power to be applied to the first resource; and, on the basis of the first information and the second information, receiving, from the base station, the physical channel or the signal on the basis of the first resource by using the first spatial filter or the first transmission power, wherein the second information can include information related to whether application of the first spatial filter or the first transmission power to the first resource is maintained.

FIG.9

S910: RECEIVING, FROM THE BASE STATION, FIRST INFORMATION RELATED TO A FIRST RESOURCE FOR A PHYSICAL CHANNEL OR SIGNAL AND SECOND INFORMATION RELATED TO A FIRST SPATIAL FILTER OR FIRST TRANSMISSION POWER APPLIED TO THE FIRST RESOURCE

S920: RECEIVING A PHYSICAL CHANNEL OR SIGNAL BASED ON THE FIRST RESOURCE FROM THE BASE STATION USING THE FIRST SPATIAL FILTER OR THE FIRST TRANSMISSION POWER BASED ON THE FIRST INFORMATION AND THE SECOND INFORMATION

**Description**

[TECHNICAL FIELD]

The present disclosure relates to a wireless communication system, and more particularly, to a method and device for performing downlink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing downlink transmission and reception in a wireless communication system.

In addition, the technical problem of the present disclosure is to provide a method and device for transmitting and receiving artificial intelligence (AI)/machine learning (ML)-based beam management/control information.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system may include receiving, from a base station, first information related to a first resource for a physical channel or signal and second information related to a first spatial filter or a first transmission power applied to the first resource; and receiving, from the base station, the physical channel or the signal based on the first resource using the first spatial filter or the first transmission power based on the first information and the second information, and the second information may include information related to whether applying the first spatial filter or the first transmission power to the first resource is maintained.

According to another embodiment of the present disclosure, a method performed by a base station in a wireless communication system may include transmitting, to a user equipment (UE), first information related to a first resource for a physical channel or signal and second information related to a first spatial filter or a first transmission power applied to the first resource; and transmitting, to the UE, the physical channel or the signal based on the first resource using the first spatial filter or the first transmission power based on the first information and the second information, and the second information may include information related to whether applying the first spatial filter or the first transmission power to the first resource is maintained.

[Technical Effects]

According to various embodiments of the present disclosure, a method and device for performing downlink transmission and reception in a wireless communication system may be provided.

Furthermore, according to various embodiments of the present disclosure, a method and device for transmitting and receiving AI/ML-based beam management/control information may be provided.

Furthermore, according to various embodiments of the present disclosure, the performance of AI/ML may be improved by more efficiently classifying data applied to training/inference performed at different time points.

The technical objects to be achieved by the present disclosure are not limited to the above-described technical objects, and other technical objects which are not described herein will be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a general functional architecture related to Functionality-based LCM and Model-based LCM.

FIG. 8 illustrates signaling operations for procedures related to AI/ML.

FIG. 9 illustrates signaling procedures between a network and a UE for an uplink transmission and reception method according to an embodiment of the present disclosure.

FIG. 10 is a diagram illustrating an uplink transmission operation of a UE in a wireless communication system to which the present disclosure may be applied.

FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE (Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212 (multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing

- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

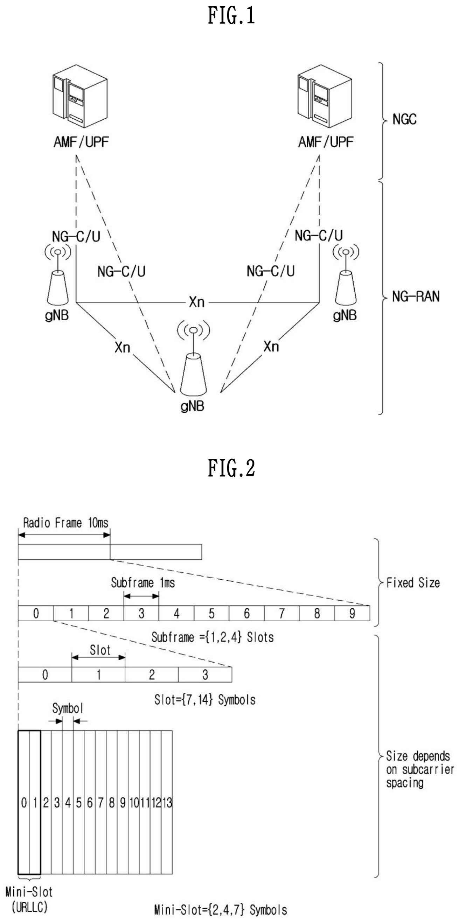

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |

(continued)

| μ | Δf=2^μ·15 [kHz] | CP |
|---|---|---|
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max}N_f/100) \cdot T_c=10$ms. Here, a radio frame is configured with 10 subframes having a duration of $T_{sf}=(\Delta f_{max}N_f/1000) \cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table **3**]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

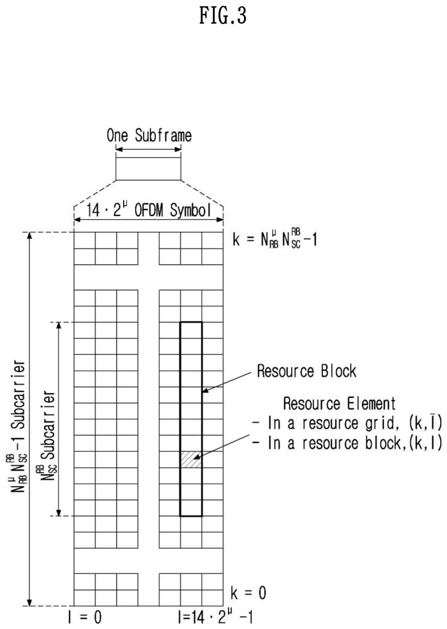

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

-    offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
-    absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

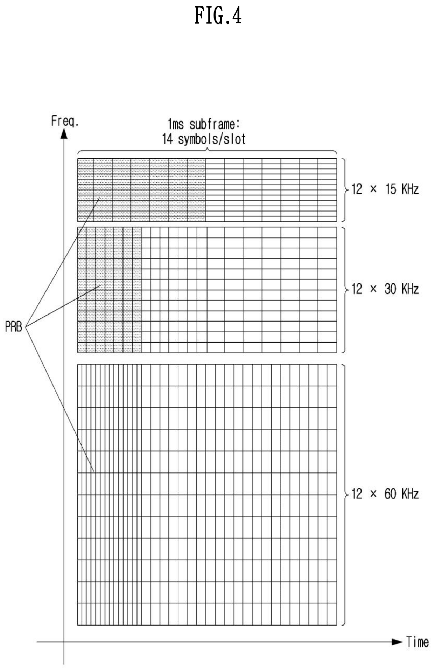

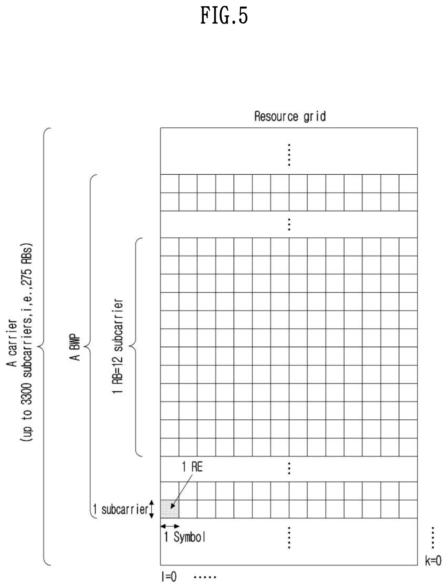

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.).

In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

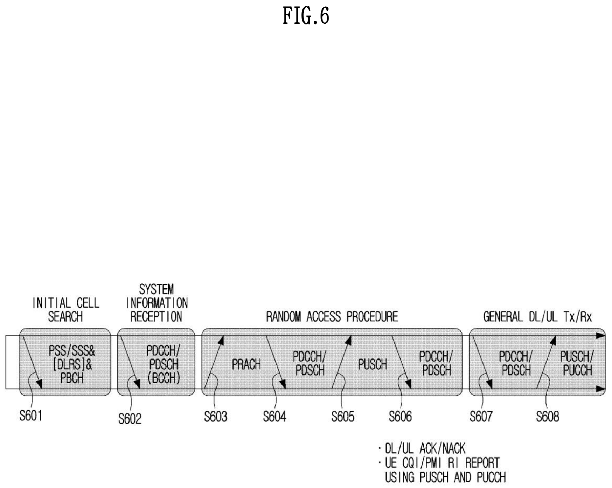

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB (physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-Co Location (QCL)

Antenna ports are defined such that the channel through which a symbol on an antenna port is carried can be inferred from the channel through which another symbol on the same antenna port is carried. Two antenna ports are said to be in a QC/QCL (quasi co-located or quasi co-location) relationship if the properties of the channel through which a symbol on one antenna port is carried can be inferred from the channel through which a symbol on another antenna port is carried.

Here, the channel characteristics include at least one of delay spread, Doppler spread, frequency/Doppler shift, average received power, received timing/average delay, and spatial Rx parameter. Here, the spatial Rx parameter refers to a spatial (reception) channel characteristic parameter such as angle of arrival.

The UE may be configured with a list of up to M TCI-State configurations in the higher layer parameter PDSCH-Config to decode the PDSCH according to the detected PDCCH having the intended DCI for the UE and the given serving cell. The M depends on the UE capability.

Each TCI-State includes parameters for establishing a quasi co-location relationship between one or two DL reference signals and the DM-RS port of the PDSCH.

The quasi co-location relationship is configured by the higher layer parameters qcl-Type1 for the first DL RS and qcl-Type2 (if set) for the second DL RS. For two DL RSs, the QCL types are not the same, regardless of whether the references are the same DL RS or different DL RSs.

The quasi co-location type corresponding to each DL RS is given by the higher layer parameter qcl-Type of QCL-Info, and can take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna port(s) can be indicated/configured to be QCL with a specific TRS from a QCL-Type A perspective and with a specific SSB from a QCL-Type D perspective. A UE that has received such an indication/configuration may receive the corresponding NZP CSI-RS using the Doppler and delay values measured at the QCL-TypeA TRS, and apply the reception beam used for QCL-TypeD SSB reception to the corresponding NZP CSI-RS reception.

The UE may receive an activation command by MAC CE signaling used to map up to eight TCI states to codepoints of the DCI field 'Transmission Configuration Indication'.

Artificial intelligence (AI) / machine learning (ML) related operations

Incorporating AI into communications can streamline and improve real-time data transmission. AI can use numerous analytics to determine how complex target tasks should be performed. This means AI can increase efficiency and reduce processing delays. Time-consuming tasks such as handover, network selection, and resource scheduling can be performed instantly using AI. AI can also play a crucial role in machine-to-machine (M2M), machine-to-human, and human-to-machine communications. Furthermore, AI can facilitate rapid communication in brain-computer interfaces (BCIs). AI-based communication systems can be supported by metamaterials, intelligent structures, intelligent networks, intelligent devices, intelligent cognitive radios, self-sustaining wireless networks, and machine learning.

Hereinafter, a functional framework for AI/ML operations is described.

Hereinafter, for a more specific explanation of AI (or AI/ML), the terms can be defined as follows.

- Data collection: Data collected from network nodes, management entities, or terminals as a basis for AI model training, data analysis, and inference.
- AI Model: A data-driven algorithm that applies AI technology to generate a set of outputs containing prediction information and/or decision parameters based on a set of inputs.
- AI/ML Training: An online or offline process of training an AI model by learning features and patterns that best represent the data and obtain a trained AI/ML model for inference.
- AI/ML Inference: The process of making predictions or inducing decisions based on collected data and the AI model using a trained AI model.

The Life Cycle Management (LCM) process for AI/ML models (i.e., model training, model deployment, model inference, model monitoring, model update, etc.) can be divided into functionality-based LCM and model-based LCM. In functionality-based LCM, AI/ML models may not be identified by the network, and the network can direct the activation/deactivation/fallback/switching of AI/ML functionality. In model-ID (identifier)-based LCM, AI/ML models can be identified by the network, and the network/terminal can activate/deactivate/select/switch the AI/ML model through the model ID.

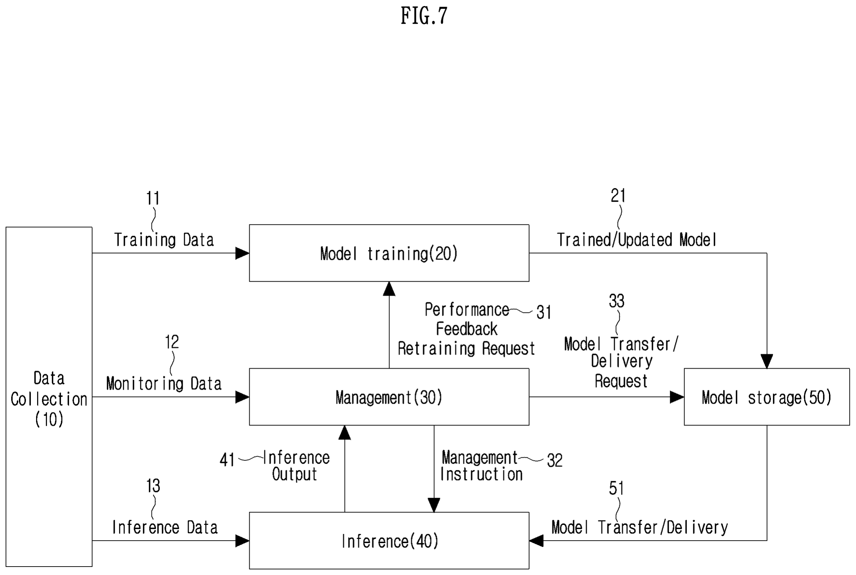

FIG. 7 illustrates a general functional architecture relevant to both Functionality-based LCM and Model-based LCM. Some of the functions or some of the data/information/command flows (i.e., arrows) illustrated in FIG. 7 may be omitted.

Referring to FIG. 7, a general functional framework can be configured to include a data collection function (10), a model training function (20), a management function (30), an inference function (40), and a model storage function (50).

The Data Collection function (10) is a function that provides input data to the Model Training function (20), Management function (30), and Inference function (40). The Data Collection function (10) can perform data preparation based on raw data and provide input data processed through data preparation. Examples of raw data may include received data/measurement data from terminals or other network entities, inference/output of AI/ML models, etc. The Data Collection function (10) may be performed by a single entity (e.g., terminal, network node, etc.) or may be performed by multiple entities.

Here, training data (11) refers to data required as input for the AI/ML Model Training function (20). Monitoring data (12) refers to data required as input for the Management (30) of the AI/ML model or AI/ML function. Inference data (13) refers to data required as input for the AI/ML Inference function (30).

The Model Training function (20) is a function that performs AI/ML model training, validation, and testing, which can generate model performance metrics that can be used as part of the AI/ML model testing procedure. The Model Training function (20) can perform data preparation (e.g., data preprocessing and cleaning, forming, and transformation) based on the Training Data (11) transferred from the Data Collection function (10), if necessary.

Trained/Updated Model (21): If there is a Model Storage function (50), it is used to pass a trained, validated and tested AI/ML model to the Model Storage function (50) or to pass an updated version of the model to the Model Storage function (50).

The Management function (30) is a function that supervises the operation of the AI/ML model or AI/ML function. In addition, the Management function (30) may perform a decision to ensure appropriate inference operation based on data received from the Data Collection function (10) (i.e., Monitoring Data (12)) and/or data received from the Inference function (40) (i.e., Inference Output (41)).

Management Instruction (32) is information required as input to manage the Inference function (40). The related information may include selection/(de)activation/switching of an AI/ML model or an AI/ML-based function, and may also include fallback to a non-AI/ML operation (i.e., not relying on the inference process).

A Model Transfer/Delivery Request (33) can be used to request model(s) from Model Storage (50).

Performance Feedback/Retraining Request (31) refers to information required as input to the Model Training function (20) (e.g., for the purpose of (re)training or updating the model) .

The Inference function (40) is a function that provides output from the process of applying an AI/ML model or AI/ML function using data (i.e., Inference Data (13)) provided by the Data Collection (10) as input. Data preparation (e.g., data preprocessing and cleaning, formatting and transformation) may be performed based on the Inference Data (13) delivered by the Data Collection (10). The Inference function (40) may also perform data preparation (e.g., data preprocessing and cleaning, forming and transformation) based on the Inference Data (13) provided by the Data Collection function (10), if necessary.

Inference Output (41) is data used in the Management function (30) to monitor the performance of an AI/ML model or AI/ML function. Inference Output (41) may include the inference output of the AI/ML model generated by the Inference function (30), and the details of the inference output may vary depending on the use case.

The Model Storage function (50) is a function for storing a learned/updated model that can be used to perform the Inference function (40). The Model Storage function (50) illustrated in FIG. 7 can be used as a reference point (if any) when applicable to protocol termination, model transmission/delivery, and related processes. Furthermore, the Model Storage function (50) is merely an example and is not intended to limit the storage location of actual AI/ML models, and may be omitted.

Model Transfer/Delivery (51) is used to transfer AI/ML models to inference functions.

The level of cooperation can be defined as follows depending on the capability of AI/ML functions between multiple nodes, and variations due to combination of multiple levels or separation of any one level are also possible.

Cat 0a) No collaboration framework: AI/ML algorithms are purely implementation-based and do not require any changes to the wireless interface.

Cat 0b) This level corresponds to a framework with a modified wireless interface tailored to efficient implementation-based AI/ML algorithms, but without collaboration.

Cat 1) Inter-node support is provided to improve the AI/ML algorithms of each node. For example, this applies when a specific node receives support from another node (for training, adaptation, etc.) and vice versa. At this level, model exchange between network nodes is not required.

Cat 2) Joint AI/ML tasks can be performed between multiple nodes. This level requires AI/ML model commands or exchange between network nodes.

FIG. 7 is a diagram illustrating an overall functional framework for an AI/ML model, and not all functions and/or all data/information/command signals illustrated in FIG. 7 may be performed within a specific node, but only some of them may be performed.

AI/ML models can be divided into one-side models and two-side models depending on whether training and/or inference is performed on one node or jointly/sequentially on multiple nodes.

A one-side model may refer to an AI/ML model in which inference is performed entirely by a single node (e.g., a terminal or network). Here, the training of the AI/ML model may also be performed entirely by a single node. The training and inference of the AI/ML model may be performed by the same node, or they may be performed by separate nodes.

A two-side model may refer to an AI/ML model in which joint inference is performed across multiple nodes (e.g., terminals and networks). Joint inference means that inference is performed jointly across multiple nodes. For example, a first part of the inference may be performed by a first node, and the remaining part of the inference may be performed by a second node. Two-side models may be categorized into several types, as follows, depending on the training method of the AI/ML model.

- First type: AI/ML models can be trained on a single node. In this case, joint training can be performed. The trained model can then be distributed to other nodes/objects.
- Second type: Joint training of AI/ML models can be performed on multiple nodes/entities (e.g., networks and terminals) respectively. Joint training can mean that model generation (e.g., CSI generation part) and model reconstruction (CSI compression by sub-use case) are trained in the same loop for forward activation and backward gradient. In this type, joint training can include both simultaneous training (i.e., model generation training and model reconstruction training are performed simultaneously) and sequential training (i.e., model reconstruction training is performed after model generation training).
- Third type: Separate training of AI/ML models can be performed on multiple nodes (e.g., networks and terminals). Separate training may mean that training starts sequentially on one node and continues on other nodes. In this case, if the first node first performs the AI/ML model and shares the training data with the second node, the second node can perform the AI/ML model using the shared training data. For example, training for the CSI generation part may be performed by the terminal, and CSI reconstruction may be performed by the network.

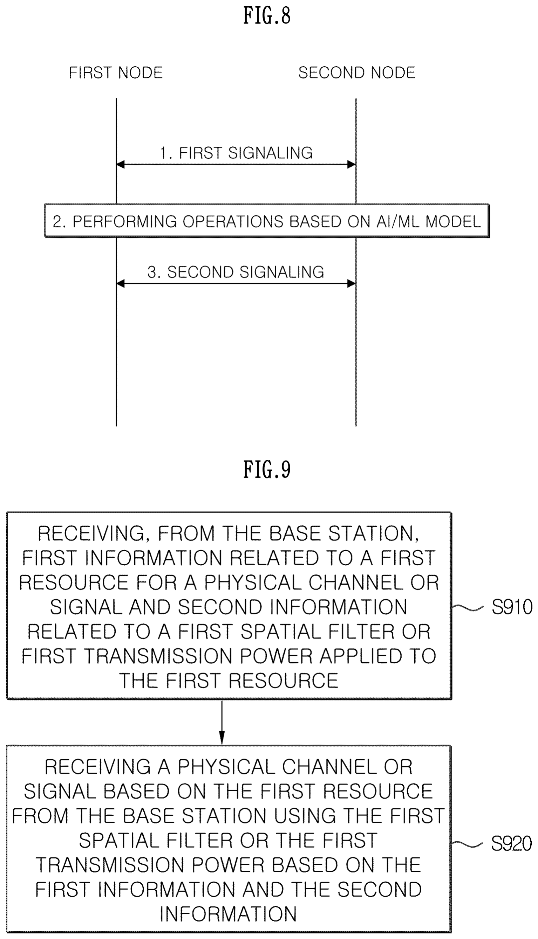

The operations described in the present disclosure described below can be explained/interpreted based on the AI/ML model as shown in FIG. 8 below, even without separate mention (i.e., without explicit mention of by/based on/for the AI/ML model).

In addition, unless specifically limited in the description of the present disclosure, the AI/ML model may correspond to a one-side model in which inference is entirely performed by one node or a two-side model in which joint inference is performed by multiple nodes.

Step 1: In the description of the present disclosure described below, signaling (e.g., information/data/channel/-signal, etc.) or a set of signaling between a specific node (e.g., terminal, network, etc.) and another node may be interpreted as the signaling or set of signaling of Step 1 used to perform an operation based on an AI/ML model, even if not otherwise mentioned. For example, it may correspond to training data for training (i.e., generation and/or reconstruction) the AI/ML model of FIG. 7, or correspond to inference data used for inference of the AI/ML model, or correspond to feedback for the AI/ML model, etc. If signaling between nodes is not required prior to an operation based on an AI/ML model in the present disclosure, Step 1 may be omitted. If a one-side model is used in the present disclosure, the unidirectional/bidirectional signaling (set) in the present disclosure may correspond to the signaling of Step 1. In addition, when a two-side model is used in the present disclosure, the one-way/two-way signaling in the present disclosure may correspond to one-stage signaling, and also, a repetitive signaling operation may correspond to one-stage signaling.

For example, in AI/ML model-based beam management (BM), if a base station predicts (i.e., infers) beam(s) with good quality based on an AI/ML model, the base station can receive quality/intensity information for multiple beams from a terminal. Furthermore, if a terminal predicts (i.e., infers) beam(s) with good quality based on an AI/ML model, the terminal may receive multiple beams from the base station.

Step 2: In the description of the present disclosure described below, an operation (e.g., calculation, selection, prediction, etc.) in a specific node (e.g., terminal, network, etc.) or a joint operation (e.g., calculation, selection, prediction, etc.) in multiple nodes (e.g., terminal, network, etc.) may correspond to a step 2 operation based on one or more functions in the functional framework of the AI/ML model, even if not mentioned separately. For example, it may correspond to training (i.e., generation and/or reconstruction) of the AI/ML model of FIG. 7 or inference of the AI/ML model, etc. When a one-side model is used, an operation performed by a single node in the present disclosure may correspond to a step 2 operation, and also, when a two-side model is used, a joint operation performed by multiple nodes in the present disclosure may correspond to a step 2 operation.

For example, in an AI/ML model-based BM, a base station can use quality/intensity information for multiple beams received from a terminal as inference data to predict (i.e., infer) beam(s) with good quality based on an AI/ML model. In addition, the terminal can measure multiple beams received from the base station and use the measurement results as inference data to predict (i.e., infer) beam(s) with good quality based on an AI/ML model.

Step 3: In the description of the present disclosure described below, signaling (e.g., information/data/channel/-signal, etc.) or a set of signaling between a specific node (e.g., terminal, network, etc.) and another node may be interpreted as a three-step signaling or a set of signaling generated due to (as a result of) an operation based on an AI/ML model, even if not otherwise mentioned. For example, it may correspond to an output resulting from inference of the AI/ML model in FIG. 7. If signaling between nodes is not required as a result of an operation based on an AI/ML model in the present disclosure, step 3 may be omitted. If a one-side model is used in the present disclosure, a one-way/two-way signaling (set) in the present disclosure may correspond to the three-step signaling. In addition, when a two-side model is used in the present disclosure, the one-way/two-way signaling in the present disclosure may correspond to three-stage signaling, and also, the repetitive signaling operation may correspond to three-stage signaling.

For example, in an AI/ML model-based BM, a base station may transmit to a terminal beam(s) predicted based on the AI/ML model as candidates so that the terminal can determine an optimal beam. Furthermore, the terminal may report to the base station beam(s) predicted based on the AI/ML model to request the base station to transmit candidate beams as candidates for determining an optimal beam.

AI/ML-based beam setup/management/indication method

In describing the present disclosure, "/" may mean "and", "or" or "and/or", and "beam" may mean a source RS for a "spatial filter/spatial parameter" or a "spatial relation". That is, "spatial filter", "spatial parameter", "source RS for spatial relation", etc. may be expressed interchangeably. Additionally, "beam" may also be interpreted as a QCL (Type-D) RS, a TCI state or (in case of uplink) a spatial relation RS.

In a basic wireless communication system, a beam indication method is used to point out a source/reference RS to be used for transmission and/or reception of a target RS/channel using a beam RS ID (e.g., CRI or/and SSBRI, etc.).

As an example of a DL beam indication method, a base station can designate a QCL source RS (i.e., QCL Type-D RS) based on a spatial Rx parameter for a target channel/RS as a specific CSI-RS resource or SSB resource, and configure/indicate the designated specific CSI-RS resource or SSB resource to a terminal. Accordingly, the terminal may receive the target channel/RS using a beam that receives the QCL source RS. That is, the base station may configure/indicate the terminal to a source RS for the target channel/RS in order to prevent the terminal from searching for unnecessary reception beams.

As an example of a UL beam indication method, a base station may configure a source RS (i.e., a spatial relationship RS) based on a spatial parameter for a target UL channel/RS to a specific CSI-RS resource, SSB resource, or SRS resource for a terminal. Here, if the source RS is a DL RS (e.g., CSI-RS or/and SSB), the terminal may transmit the target UL channel/RS with a Tx beam corresponding to the Rx beam used for reception of the corresponding DL RS. If the source RS is a UL RS (e.g., SRS), the terminal may transmit the target UL channel/RS with a Tx beam used for transmission of the corresponding UL RS.

DL beam RS (e.g., QCL type-D RS) may be included and indicated in the DL TCI state, and UL beam RS (e.g., spatial relationship RS) may be included and indicated in the UL TCI state. In addition, when a (one-to-one) correspondence relationship is established between Tx beams and Rx beams, the source RSs for the DL beam and UL beam may be the same DL RS (e.g., CSI-RS, SSB) resource, and a joint DL/UL TCI state that comprehensively indicates this may be configured/indicated.

In describing the present disclosure, the TCI/QCL/space relationship RS indication method is collectively referred to as the "beam indication method".

In improved wireless communication systems, AI/ML can be applied to the air interface. For example, AI/ML can be applied to beam management, CSI, and positioning. Hereinafter, an AI/ML-based beam management method will be described.

AI/ML-based beam management methods can be divided into "methods for improving beam management performance through spatial beam prediction" and "methods for improving beam management performance through temporal beam prediction."

"A method for improving beam management performance through spatial beam prediction" refers to a method for improving beam management precision with low RS overhead by having terminal AI/ML (i.e., AI/ML running within the terminal) and/or network AI/ML (i.e., AI/ML running within the network) perform beam management based on current/past beam RS measurement results and terminal location/movement information. When the above method is applied, performance comparable to beam selection from a larger number of beam RSs can be output by utilizing measurement results from a smaller number of beam RSs.

"Method for improving beam management performance through temporal beam prediction" refers to a method in which terminal AI/ML and/or network AI/ML predict the quality of beam(s) at a future point in time based on current/past beam RS measurement results, terminal location/movement information, time-varying characteristics of the channel, etc.

As an example of the present disclosure, for AI/ML-based beam management, BM (beam management)-case 1 (i.e., spatial domain DL beam prediction for beam set A based on beam set B measurement results) and BM-case 2 (i.e., temporal DL beam prediction for beam set A based on past measurement results of beam set B) may be supported for characterization and basic performance evaluation. Specifically, BM-case 1 refers to a case that performs only the spatial beam prediction described above, and BM-case 2 may include a case that performs spatial beam prediction while performing the temporal beam prediction described above and a case that performs only temporal beam prediction.

Here, set A may collectively refer to beam RSs on which a terminal or network performs prediction, and set B may collectively refer to a set of beam RSs that are utilized as human resources for an AI/ML model to perform prediction in set A. Additionally, set C may collectively refer to a set of beam RSs measured by a terminal, and set B may be identical to or a subset of set C.

Set A may include 128 beams (e.g., beam RS #0, beam RS #1, ..., beam RS #127). The base station may transmit beams of set A to the terminal at a (relatively long) specific cycle or on-demand, and the transmitted beams of set A may be utilized for the purpose of monitoring the performance of network AI/ML or terminal AI/ML.

Set C may include 32 beams (e.g., beam RS #0, beam RS #4, beam RS#8, ..., beam RS #124). That is, set C may be configured as one of four beams in set A. By periodically/aperiodically transmitting set C to a terminal, the terminal may perform beam measurement and beam reporting. For example, the terminal may perform a reporting operation for a specific beam among the beams in set A through spatial beam prediction.

Set B may include a subset of Set C, and may collectively refer to a set of beams utilized as actual AI/ML model input. Depending on the AI/ML model implementation, all or some of the beams in Set C may be used as actual AI/ML input. For example, only the N highest quality beams among all beams in Set C, or beams above a certain threshold quality, may be used in the AI/ML model.

In order for the AI/ML model implemented in the terminal to perform the above-described space/time domain beam prediction, sufficient measurement values for the sets A/B/C beams may be required. Through the measurement values for the sets A/B/C beams, learning, validation, inference, update, and performance monitoring operations for the AI/ML model can be performed.

Meanwhile, there is a problem that RS-related indicators/IDs (e.g., SSBRI, CSI-RS resource ID, SRS resource ID, etc.) used in place of beam IDs in basic wireless communication systems do not guarantee that the same beam or different beams are being used/applied.

For example, even if the same RS resource ID is set, different Tx beams may be applied/used at each transmission time. In addition, even if different RS resource IDs are set, the same beam may be applied. For example, the same Tx beam may be applied/used to multiple CSI-RS resources within a CSI-RS resource set in which a parameter related to repeated transmission (e.g., "repetition = on") is set. In addition, the same Tx beam may be applied/used to different CSI-RS resources regardless of the parameter related to repeated transmission.

QCL Type-D (or QCL for spatial Rx parameters) introduced for beam direction is defined for terminal Rx beam configuration and does not guarantee whether the base station applies the same beam. That is, different Tx beams may be applied to different RS resource(s) in a QCL Type-D relationship.

For example, one SSB resource may be configured as a QCL Type-D source RS for multiple CSI-RS resource(s). In this case, SSB may be transmitted in a beam having a wide beam width, and each of the CSI-RS resource(s) may be transmitted in a plurality of different beams having narrow beam widths within the beam width. Additionally, different beams may be applied at different times for the same CSI-RS resource within the spatial coverage of the SSB beam in the QCL Type-D relationship.

Therefore, the QCL Type-D relationship configured for DL RS resource(s) may indicate that "DL RS resource(s) are resources that transmit with similar Tx beams (angles)". Accordingly, the terminal may determine that there is no problem even if the DL RS resource(s) are received with the same Rx beam. In other words, the QCL-based judgment criterion may not have a problem with the terminal Rx beam setting.

However, for efficient AI/ML operation, the terminal must verify whether a specific beam measurement value is a value measured based on the same beam (from the perspective of a spatial transmission filter such as beam direction/beam width). The QCL-based judgment criterion may not be appropriate for determining whether a specific beam measurement value is a value measured based on the same beam.

Additionally, in the existing wireless communication system, the parameter for whether to repeat transmission (i.e., "repetition = on") for CSI-RS resources included in the same CSI-RS resource set by the RRC message is used to search for a terminal Rx beam. Whether to maintain the same Tx beam of the base station for multiple CSI-RS resources can be indicated through the parameter for whether to repeat transmission, but this is defined to search for a terminal Rx beam by allowing the terminal to change the reception beam for the CSI-RS resources within the same slot.

That is, the base station may apply different Tx beams to CSI-RS resources activated/triggered at different times/slots (however, the same beam is maintained for multiple resources within a slot). When the corresponding CSI-RS resource set is triggered at different times, it may not be guaranteed that the same beam is applied to the CSI-RS resources included in the corresponding CSI-RS resource set.

That is, for the reasons described above, it is difficult to distinguish beams through RS resource IDs in a basic wireless communication system, and it may be difficult to secure sufficient measurement values to be used for learning, verification, inference, update, and performance monitoring operations of AI/ML.

Hereinafter, a method for determining whether a specific beam measurement value is a value measured based on the same beam (from a spatial transmission filter perspective such as beam direction/beam width, etc.) will be specifically described. In describing the present disclosure, "the same beam" may mean the same beam from a beam direction, beam width, and spatial filter perspective. That is, the transmission power (ratio) applied to the "same beam" may be the same or different.

FIG. 9 is a diagram for describing the operation of a UE in a wireless communication system to which the present disclosure can be applied.

The UE may receive, from the base station, first information related to a first resource for a physical channel or signal and second information related to a first spatial filter or first transmission power applied to the first resource (S910) .

For example, the UE may receive information related to a first resource for a physical channel or signal from the base station through a higher layer signaling (e.g., a system information block (SIB), a radio resource control (RRC) message, etc.). That is, the UE may be configured with a first resource related to a physical channel or signal from the base station.

And, after the first resource is configured or while the first resource is configured, the UE may be configured whether the same filter or/and the same transmission power are applied to the physical channel or signal based on the first resource.

Specifically, the second information may include information related to whether applying the first spatial filter or the first transmission power to the first resource is maintained.

For example, the second information may include information on the time point at which the first spatial filter or the first transmission power is applied to the first resource is maintained. For example, the information on the time point may include at least one of a time period, a transmission occasion (TO), or a number of transmissions during which applying the first spatial filter or the first transmission power to the first resource is maintained. That is, the second information may include information indicating whether the same beam (i.e., spatial filter) or/and the same beam power is applied to a specific time period/count/TO for the first resource.

Additionally or alternatively, the information on the time point at which applying the first spatial filter or the first transmit power to the first resource is maintained may include at least one of a time pattern related to applying the same spatial filter to the first resource or a time pattern related to applying the same transmit power to the first resource.

That is, information on the point in time when the first spatial filter or the first transmission power is applied to the first resource may include pattern information indicating the spatial filter and/or transmission power to be applied to each resource for each TO/time period/number of times. For example, the second information may include an index or bitmap corresponding to the spatial filter pattern or transmission power pattern applied to each resource.

The above-described example relates to, but is not limited to, a case where the second information includes time pattern information indicating a spatial filter and/or transmission power to be applied to each resource by time period/-TO/number of times. Here, "TO" may be replaced with "time period" or/and "number of times."

Additionally, based on the fifth information related to the second resource for the physical channel or signal being included in the first information, the second information may include information on a spatial filter or transmission power to be applied to the second resource (e.g., information on whether the same spatial filter or the same transmission power is maintained for a certain time period and/or TO for the second resource, etc.). That is, when another resource for the physical channel or signal is configured through the first information, the first information may include information on a spatial filter or transmission power to be applied to the other resource.

As an example of the present disclosure, based on a periodicity being configured or defined for a physical channel or signal, first information and second information may be transmitted from a base station to a UE via an RRC message. Here, the physical channel or signal for which the periodicity is configured may include at least one of periodic channel state information (CSI) - a reference signal (RS) or a synchronization signal block (SSB).

In another example of the present disclosure, based on a physical channel or signal being activated or triggered via MAC-CE or DCI, the second information may be transmitted to the terminal via an RRC message, MAC-CE or DCI. Here, the physical channel or signal activated or triggered by the MAC-CE or DCI may include at least one of a semi-persistent CSI-RS, an aperiodic CSI-RS, a configured grant or a dynamic grant physical downlink shared channel (PDSCH).

The UE may receive a physical channel or signal based on the first resource from the base station using the first spatial filter or the first transmission power based on the first information and the second information (S920).

The UE may receive a physical channel or signal based on the first resource from the base station during a first time period, at least one first TO, or a first number of times, using a first spatial filter or a first transmission power set for the first resource. The physical channel/resource transmitted during at least one first time period, at the first TO, or transmitted the first number of times may have the same spatial filter or/and the same transmission power applied/maintained according to the second information. That is, the UE may expect that the same beam (i.e., the same spatial filter) or/and the same beam power (i.e., the same transmission power) is applied/maintained for the physical channel or signal transmitted based on the first resource during the first time period, within the first TO, or the first number of times.

For example, assume that the second information includes information indicating that a second spatial filter and/or a second transmission power is applied to a first resource in at least one second time interval, in a second TO. In this case, the UE may receive a physical channel or signal from the base station using the second spatial filter or the second transmission power in at least one second time interval, in a second TO.

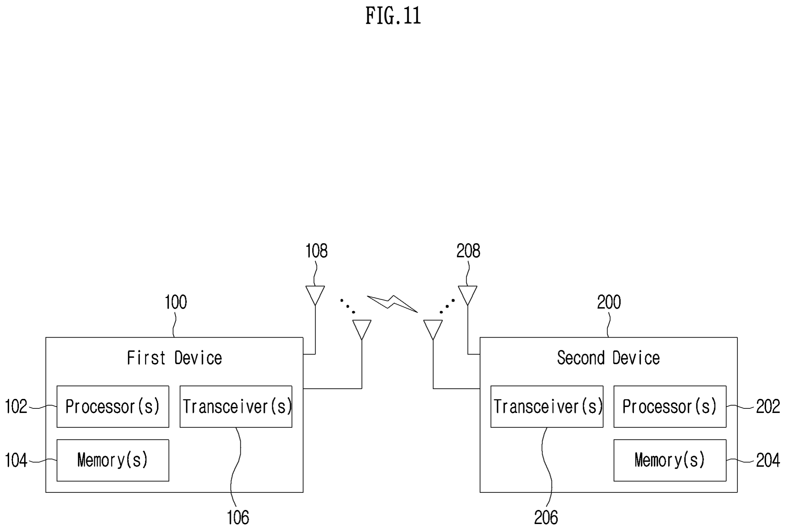

The method described in the example of FIG. 9 can be performed by the first device (100) of FIG. 11. That is, the UE of FIG. 9 can be implemented as the first device (100). For example, one or more processors (102) of the first device (100) of FIG. 11 may transmit first information related to a first resource for a physical channel or signal and second information related to a first spatial filter or a first transmission power applied to the first resource to a base station through one or more transceivers (106). The one or more processors (102) may receive the physical channel or signal from the base station through one or more transceivers (106) using the first spatial filter or the first transmission power based on the first information and the second information.

Furthermore, one or more memories (104) of the first device (100) may store commands for performing the method described in the example of FIG. 9 or the examples described below when executed by one or more processors (102).

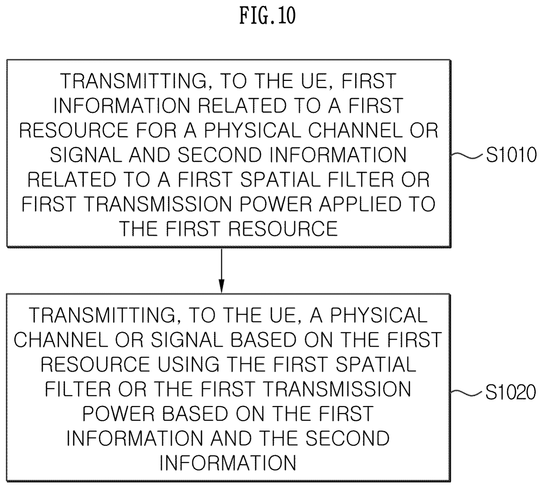

FIG. 10 is a diagram for describing the operation of a base station in a wireless communication system to which the present disclosure can be applied.

The base station may transmit, to the UE, first information related to a first resource for a physical channel or signal and second information related to a first spatial filter or first transmission power applied to the first resource (S1010).

That is, when the base station configures the first resource for a physical channel or signal to the UE, it may configure to the UE whether the same spatial filter or/and the same transmission power are applied to the first resource.

The base station may transmit a physical channel or signal to the UE using a first spatial filter or a first transmission power based on the first information and the second information (S1020).

For example, assume that the second information configures/indicates that the same spatial filter or the same transmission power is applied to a physical channel or signal based on a first resource during a first time period, within a first TO, or for a first number of times. The base station may transmit the physical channel or signal to the UE using the first spatial filter or the first transmission power during at least one of the first time periods, within the first TO, or for the first number of times, according to the first information and the second information.

The method described in the example of FIG. 10 can be performed by the second device (200) of FIG. 11. That is, the base station of FIG. 10 can be implemented by the second device (200). For example, one or more processors (202) of the second device (200) of FIG. 11 may transmit first information related to a first resource for a physical channel or signal and second information related to a first spatial filter or a first transmission power applied to the first resource to a UE through one or more transceivers (206). The one or more processors (202) may transmit the physical channel or signal to the UE through one or more transceivers (206) using the first spatial filter or the first transmission power based on the first information and the second information.

Furthermore, one or more memories (204) of the second device (200) may store commands for performing the method described in the example of FIG. 10 or the examples described below when executed by one or more processors (202).

Embodiment 1

Embodiment 1 relates to a method for informing a UE whether the same/different Tx beams are applied for different transmission times of the same DL RS resource/physical channel. That is, Embodiment 1 is intended to resolve a problem in which different beams may be applied to RS resources at different transmission times even if the IDs of the RS resources are the same.

When performing configuration/activation/trigger for the same DL RS/channel(s), the base station may transmit to the terminal information related to whether the same beam is maintained for the same DL RS/channel(s). For example, the base station may transmit to the terminal information related to whether the same/different beam is applied for the same DL RS/channel(s) at a specific point in time.

Embodiment 1-1

In one embodiment of the present disclosure, when physical channels/resources are configured by a base station via an RRC message, the base station may transmit information to the UE about whether the same transmission beam (e.g., a spatial domain transmission field) is applied to the physical channels/resources.

For example, a base station may transmit information to a UE regarding whether the same Tx beam is applied to a periodic channel/resource (e.g., P(periodic) CSI-RS/SSB). Accordingly, whether the beam applied is the same when the corresponding channel/resource is transmitted at multiple points in time can be guaranteed, and information related to the channel/resource corresponding to the same beam ID can be utilized by the UE/base station as AI/ML input data.

As another example, the base station may transmit information to the UE regarding whether the same Tx beam is applied to dynamically activated/triggered channels/resources (e.g., SP (semi-persistent) CSI-RS, CG (configured grant) /DG (dynamic grant) PDSCH). That is, if whether the same Tx beam is applied to dynamically activated/triggered channels/resources is instructed/configured to the UE, the same beam for the corresponding channel/resource can be maintained even if the corresponding channel/resource is activated/deactivated/triggered more than once via MAC-CE/DCI. Accordingly, whether the beam applied to the corresponding channel/resource activated/triggered at multiple points in time is guaranteed, and information related to the channel/resource corresponding to the same beam ID can be utilized as AI/ML input data by the terminal/base station.

Here, the information/indicator on whether the same Tx beam is maintained for a specific channel/resource may be configured as 1 bit. For example, if the same Tx beam is applied to a specific channel/resource, "On" may be set on the corresponding bit, and if the same Tx beam is not applied to a specific channel/resource, "off" may be set on the corresponding bit. However, this is only an example, and a parameter indicating that the same Tx beam is applied to a specific channel/resource may be set/exist only when the same Tx beam is maintained for a specific channel/resource.

And, information/indicator on whether the same Tx beam is maintained for a specific channel/resource may be included in an RRC message that configures a specific channel/resource, control information (e.g., DCI, MAC-CE, etc.) that activates/triggers a specific channel/resource, but is not limited thereto.

Embodiment 1-2

In one embodiment of the present disclosure, when a physical channel/resource is configured through an RRC message, the base station may transmit information related to the times at which the same Tx beam is applied to the UE.

For example, information related to the points in time at which the same Tx beam is applied may include the period and/or number of times the same beam is maintained. The period for maintaining the same beam may be set in units of msec, sec, min, hour, or in units of slot/sub-frame/frame. That is, information related to the points in time at which the same Tx beam is applied may indicate/set that the same Tx beam is applied/maintained within the period/number of times the same beam is maintained. In addition, when the period for maintaining the same beam has elapsed or the number of times the same beam is maintained has been exceeded, the UE may determine that another Tx beam may be used. Accordingly, measurement values for channels/resources may be collected based on the period and/or number of times the same beam is maintained, and the collected measurement values may be utilized as data for AI/ML.

As another example, information related to the times at which the same Tx beam is applied may include information about the TO (transmission occasion) or time at which the same beam is applied. That is, information about the TO or time at which the same beam is applied may be configured for a physical channel/resource.

Additionally or alternatively, information about the times at which the base station applies the same Tx beam configured for the UE may include pattern/index/bitmap information indicating transmission times at which the same beam is to be applied. For example, the pattern/index/bitmap information indicating transmission times at which the same beam is to be applied may include information indicating that the same beam (e.g., beam #0) is applied to odd-numbered transmission TOs/slots/frames and that the same beam (e.g., beam #1) is applied to even-numbered transmission TOs/slots/frames. Here, beam #0 and beam #1 may be different beams, but are not limited thereto.

As another example, a plurality of time patterns related to the same/different beam application may be configured or defined for the UE, and the pattern index applied to the corresponding channel/resource may be configured separately. In this case, one of the plurality of time patterns configured for the UE may include a pattern that maintains the same beam throughout the entire time point (e.g., the pattern described in Embodiment 1-1).

Embodiment 1-2, like Embodiment 1-1, may be applied to dynamically activated/triggered channel resources as well as periodic channels/resources. That is, information related to the points in time at which the same Tx beam is applied to dynamically activated/triggered channels/resources can be applied.

Additionally or alternatively, the base station may transmit to the UE information about the number of times the same Tx beam can be maintained when dynamically activating/triggering a channel/resource (e.g., the number of activation/triggering of channel resources for which the same Tx beam can be maintained). For example, the base station may transmit to the UE "information indicating that the same beam is maintained until/every N (where N is a natural number greater than or equal to 1) activation/triggering times". In this case, the base station may transmit to the UE N as the number of activation/triggering of a channel/resource for which the same Tx beam is maintained.

As another example, the base station may transmit pattern/index/bitmap information for applying/maintaining the same beam based on the number of activations/triggers of a channel/resource to the UE. As an example, the pattern/index/bitmap information for applying/maintaining the same beam based on the number of activations/triggers of a channel/resource may include information indicating that the same beam (e.g., beam #0) is applied when activating/triggering an odd channel/resource and the same beam (e.g., beam #1) is applied when activating/triggering an even channel/resource.

Embodiment 1-3

In one embodiment of the present disclosure, the base station may transmit to the UE information on whether to maintain the same Tx beam through an activation/triggering message (e.g., MAC CE or DCI) for a dynamically activated/triggered channel/resource (e.g., SP/AP CSI-RS, CG/DG PDSCH). Here, the base station may transmit to the UE information on whether to maintain the same Tx beam for the corresponding channel/resource by comparing it with a previously activated/triggered time. Additionally or alternatively, the base station may transmit to the UE information on the time of applying the same Tx beam (e.g., time/time/beam-related index of applying the same Tx beam, pattern bitmap, etc.).

As an example of the present disclosure, the information transmitted to the UE via the activation/triggering message may include information on whether the beam applied to the channel/resource activated/triggered immediately before transmitting the activation/triggering message and the beam applied to the channel/resource activated/triggered via the activation/triggering message are the same.

Additionally or alternatively, the information transmitted to the UE via the activation/triggering message may include information on whether the beam applied to the channel/resource activated/triggered at a specific point in time and the beam applied to the channel/resource activated/triggered via the activation/triggering message are the same.

Additionally or alternatively, the information transmitted to the UE via the activation/triggering message may include a beam index to be applied to a channel/resource activated/triggered via the activation/triggering message among a plurality of beam indices.

Additionally or alternatively, the information transmitted to the UE via the activation/triggering message may include a method of transmitting information provided to the terminal via the RRC message described in Embodiment 1-2 to the terminal via the activation/triggering message. For example, information regarding the period/number of times/TO/time associated with maintaining/applying the same beam may be dynamically transmitted to the terminal via the information transmitted to the terminal via the activation/triggering message.

For example, when the above-described methods are applied, in order to reduce the payload size transmitted to MAC-CE/DCI, candidate values related to the period/number of times/TO/time associated with maintaining/applying the same beam may be configured to the UE via an RRC message or defined as a specific value/pattern. Then, the base station may transmit a specific value or index among the candidate values to the UE via an activation/trigger message.

For example, a base station may configure time/TO-related patterns to which the same beam is applied for a UE, or time/TO-related patterns to which the same beam is applied can be defined. Then, the base station may transmit to the UE, through an activation/trigger message, a pattern to be actually applied (or an index for the pattern) among the time/TO-related patterns to which the same beam is applied.

Embodiment 2

Embodiment 2 relates to a method for transmitting information to a UE about whether the same Tx beam is applied to different DL RS resources/DL physical channels (or specific transmission time(s) of different DL RS resources/DL physical channels). That is, Embodiment 2 is an embodiment for solving a problem that the same Tx beam is not guaranteed for transmission of different RS resources/channels in a QCL relationship.

When the base station configures/activates/triggers (different) DL RS/channel(s), it may transmit to the UE information about the resource channel (at a specific transmission point in time) to which the same beam as the corresponding DL/RS channel(s) will be applied.

Embodiment 2-1

In one embodiment of the present disclosure, when a specific physical channel/resource is selected through an RRC message or/and a specific physical channel/resource is activated/triggered through an activation/trigger message, the base station may transmit to the UE information about a DL RS resource/channel (or a transmission point of the DL RS resource/channel) that uses the same beam as the beam to be applied to the corresponding physical channel/resource (or a transmission point of the corresponding physical channel/resource).

The base station may transmit to the UE an index related to another DL resource/channel (e.g., a CSI-RS/SSB resource index, etc.) that applies the same beam as the beam to be applied to the physical channel/resource (configured via an RRC message or activated/triggered via an activation/trigger message). Additionally or alternatively, the base station may transmit to the UE transmission timing information for the other DL resource/channel and/or transmission timing information of the physical channel/resource.

As described in embodiments 1/1-1/1-2/1-3, the transmission point information of a physical channel/resource (established via an RRC message or activated/triggered via an activation/trigger message) and/or the transmission point information for another DL resource/channel may be composed of information about TO/time/duration/number of times or/and information about the number of activations/triggers.

Embodiment 2-2

In one embodiment of the present disclosure, when a specific physical channel/resource is selected via an RRC message or/and a specific physical channel/resource is activated/triggered via an activation/trigger message, the base station may transmit information about a beam to be applied to the corresponding physical channel/resource (or, a transmission point of the corresponding physical/channel) to the UE.

Information about the beam to be applied to the corresponding physical channel/resource can be expressed/-configured as beam index/ID information, beam boresight direction-related information, beam spatial coveragerelated information (e.g., sector ID), etc. Here, in the case of beam boresight direction-related information, the beam direction/intensity can be indicated as a coordinate value in a 2D/3D grid. In addition, the beam index/ID can be a general term for an index for indicating "multiple RS resources/channels and/or transmission time points to which the same beam is applied", and beam direction/pattern/coverage information, etc. may not be included/related to each ID.

The base station may transmit to the UE beam information/ID to be applied to a physical channel/resource (configured via an RRC message or activated/triggered via an activation/trigger message). Additionally or alternatively, the base station may transmit to the UE transmission timing information for other DL resources/channels to which the same beam as the beam to be applied to the physical channel/resource is applied and/or transmission timing information of the physical channel/resource.

As described in embodiments 1/1-1/1-2/1-3, the transmission point information of a physical channel/resource (established via an RRC message or activated/triggered via an activation/trigger message) and/or the transmission point information for another DL resource/channel may be composed of information about TO/time/duration/number of times or/and information about the number of activations/triggers.

Information on applying/maintaining the same beam as proposed in various embodiments of the present disclosure may be transmitted to the UE via an explicit message/indicator, but is not limited thereto. Information on applying/maintaining the same beam may be transmitted to the UE via an implicit message/indicator. For example, information on applying/maintaining the same beam may be transmitted to the UE via a sequence ID constituting an RS. In this case, the UE may detect a sequence applied by the base station through blind detection of a plurality of candidate sequences, and through this, the UE may obtain the above-described information (e.g., a same beam maintenance information indicator, a beam ID, etc.).

Additionally or alternatively, explicit or implicit message/indicator signaling may be omitted, and information regarding the application/maintenance of the same beam may be defined to apply to specific RS/channel resource(s) or (AI/ML-related) procedures/reports. For example, if a (new) defined data collection procedure/operation (e.g., a new L1/L2 beam report) (for AI/ML), the UE may be defined/configured to assume (without separate configuration) that all beam RS resources associated with the procedure/operation maintain the same Tx beam, regardless of the transmission time. Furthermore, the UE may be defined/configured to apply different beams to different RS resources. Accordingly, each RS resource ID may be applied/utilized as a beam ID without separate configuration.

Embodiment 3

Embodiment 3 relates to a method in which the same Tx beam is maintained regardless of the transmission time for beam RS resources related to a specific beam procedure/operation (related to AI/ML). That is, the UE may assume that the same Tx beam is maintained for beam RS resources related to the beam procedure/operation (related to AI/ML), and can assume that different beams are applied to different RS resources.

The UE may measure the signal transmitted by the base station consistently through the same beam more than once, and the measured data can be utilized for AI/ML operations (e.g., learning, recommendation, monitoring, etc.). Accordingly, more reliable results (e.g., beam prediction) can be output.

In one embodiment of the present disclosure, to improve AI/ML operations, it may be necessary to consistently maintain the transmission power or power ratio of a beam. To this end, the term "beam" in Embodiments 1 and 2 may be replaced/expanded and interpreted as "beam and corresponding beam transmission power (ratio)" or "transmission power (ratio)."

For example, the base station may configure/indicate the UE that the same transmission power will be maintained for a specific CSI-RS resource (or/and specific points in time of the CSI-RS resource), so that the UE/base station may efficiently collect measurements for the same beam and power for AI/ML.

As another example of the present disclosure, the base station may configure the UE to apply/maintain the same beam and transmission power (or transmission power ratio) for different beam RS resource(s) (or specific points in time of the beam RS resource(s)). As an example, the transmission power ratio may include the power ratio between CSI-RS and SSB and the power ratio between CSI-RS and PDSCH (DMRS), etc.

In the embodiments described above (e.g., Embodiment 1, Embodiment 1-1, Embodiment 1-2, Embodiment 1-3, Embodiment 2, Embodiment 2-1, Embodiment 2-2, Embodiment 3, etc.), the base station may transmit to the UE configuration/indication information related to the DL RS/channel (e.g., RS resource, resource set, physical channel, etc.) transmitted through the beam. Additionally or alternatively, the base station may transmit to the UE configuration/indication information related to the corresponding RS/channel.

For example, the configuration/indication information related to CSI/beam reporting may include information described in the above-described embodiments (e.g., information related to maintaining the same beam). Accordingly, information related to maintaining the same beam may be indirectly configured in the RS resource(s) related to CSI/beam reporting.

When multiple RS resources are associated with the same report, the same information may be configured for all of the RS resources. The information/procedures described above may be applied to higher-layer reporting messages as well as Layer-1 reporting.

If a data collection procedure (for AI/ML) or a UE reporting operation related thereto is (newly) defined, the above-described information/procedure may be applied, and beam (and/or beam power (ratio)) information for all beams related to the information/procedure may be provided consistently.

Additionally or alternatively, since the AI/ML-related beam report is for data collection by the UE, the UE may not need to report the results of the measurement values to the base station every time. Accordingly, just as a UE with "no report" set in a basic wireless communication system omits beam-related UCI reports, the reporting information may be omitted from the configuration/indication information for the UE reporting operation described above.

Although the above-described embodiments primarily describe terminal AI/ML-based beam-related operations, the methods according to the above-described embodiments can be applied/utilized to UE implementations other than AI/ML implementations. In addition, the methods according to the above-described embodiments can be extended and applied to other (AI/ML-based) operations other than beam-related operations.

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR) .

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, first information related to a first resource for a physical channel or signal and second information related to a first spatial filter or a first transmission power applied to the first resource; and
   receiving, from the base station, the physical channel or the signal based on the first resource using the first spatial filter or the first transmission power based on the first information and the second information,
   wherein the second information includes information related to whether applying the first spatial filter or the first transmission power to the first resource is maintained.

2. The method of claim 1, wherein:
   the second information includes information on a time point at which applying the first spatial filter or the first transmission power to the first resource is maintained.

3. The method of claim 2, wherein:
the information on the time point includes at least one of a time period during which applying the first spatial filter or the first transmission power is maintained, a transmission occasion (TO), or a number of transmissions.

4. The method of claim 2, wherein:
information on the time point includes at least one of a time pattern related to applying a same spatial filter to the first resource or a time pattern related to applying a same transmission power to the first resource.

5. The method of claim 4, wherein:
the second information includes an index or bitmap corresponding to a pattern related to the time point of applying the same spatial filter to the first resource or a time pattern for applying the same transmission power.

6. The method of claim 5, wherein:
based on the first spatial filter or the first transmission power being applied to the first resource in at least one first TO by the index or the bitmap, the physical channel or the signal based on the first resource is received from the base station using the first spatial filter or the first transmission power in the at least one first TO.

7. The method of claim 1, wherein:

based on a periodicity being configured or defined for the physical channel or the signal, each of the first information and the second information is transmitted to the UE via an radio resource control (RRC) message, and based on the physical channel or the signal being activated or triggered via a medium access control-control element (MAC-CE) or downlink control information (DCI), the second information is transmitted to the UE via the RRC message, the MAC-CE or the DCI.

8. The method of claim 7, wherein:

the physical channel or signal for which the periodicity is configured includes at least one of a periodic channel state information (CSI)-reference signal (RS) or a synchronization signal block (SSB), and the physical channel or signal activated or triggered by the MAC-CE or the DCI includes at least one of a semi-persistent CSI-RS, an aperiodic CSI-RS, a configured grant, or a dynamic grant physical downlink shared channel (PDSCH).

9. The method of claim 1, wherein:
data obtained through reception of the physical channel or the signal is used for training or inference of an artificial intelligence (AI) model that outputs beam prediction results.

10. A user equipment (UE) in a wireless communication system, the UE comprising:

at least one transceiver; and
at least one processor coupled to the at least one transceiver;
wherein the at least one processor is configured to:

receive, from a base station through the at least one transceiver, first information related to a first resource for a physical channel or signal and second information related to a first spatial filter or a first transmission power applied to the first resource; and
receive, from the base station through the at least one transceiver, the physical channel or the signal based on the first resource using the first spatial filter or the first transmission power based on the first information and the second information,
wherein the second information includes information related to whether applying the first spatial filter or the first transmission power to the first resource is maintained.

11. A method performed by a base station in a wireless communication system, the method comprising:

transmitting, to a user equipment (UE), first information related to a first resource for a physical channel or signal and second information related to a first spatial filter or a first transmission power applied to the first resource; and
transmitting, to the UE, the physical channel or the signal based on the first resource using the first spatial filter or the first transmission power based on the first information and the second information,

wherein the second information includes information related to whether applying the first spatial filter or the first transmission power to the first resource is maintained.

12. A base station in a wireless communication system, the base station comprising:

at least one transceiver; and
at least one processor coupled to the at least one transceiver;
wherein the at least one processor is configured to:

transmit, to a user equipment (UE) through the at least one transceiver, first information related to a first resource for a physical channel or signal and second information related to a first spatial filter or a first transmission power applied to the first resource; and
transmit, to the UE through the at least one transceiver, the physical channel or the signal based on the first resource using the first spatial filter or the first transmission power based on the first information and the second information,
wherein the second information includes information related to whether applying the first spatial filter or the first transmission power to the first resource is maintained.

13. A processing device configured to control a user equipment (UE) in a wireless communication system, the processing device comprising:

at least one processor; and
at least one computer memory operatively coupled to the at least one processor and storing instructions for performing operations upon being executed by the at least one processor,
wherein the operations comprise:

receiving, from a base station, first information related to a first resource for a physical channel or signal and second information related to a first spatial filter or a first transmission power applied to the first resource; and
receiving, from the base station, the physical channel or the signal based on the first resource using the first spatial filter or the first transmission power based on the first information and the second information,
wherein the second information includes information related to whether applying the first spatial filter or the first transmission power to the first resource is maintained.

14. At least one non-transitory computer readable medium storing at least one instruction, wherein:
the at least one instruction executed by at least one processor controls a device to perform uplink transmission in a wireless communication system to perform:

receiving, from a base station, first information related to a first resource for a physical channel or signal and second information related to a first spatial filter or a first transmission power applied to the first resource; and
receiving, from the base station, the physical channel or the signal based on the first resource using the first spatial filter or the first transmission power based on the first information and the second information,
wherein the second information includes information related to whether applying the first spatial filter or the first transmission power to the first resource is maintained.

## FIG.1

## FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers,i.e.,275 RBs)

A BWP

1 RB=12 subcarrier

1 RE

1 subcarrier

1 Symbol

k=0

l=0 ·····

# FIG.6

INITIAL CELL SEARCH — PSS/SSS& [DLRS]& PBCH — S601

SYSTEM INFORMATION RECEPTION — PDCCH/PDSCH (BCCH) — S602

RANDOM ACCESS PROCEDURE
- PRACH — S603
- PDCCH/PDSCH — S604
- PUSCH — S605
- PDCCH/PDSCH — S606

GENERAL DL/UL Tx/Rx
- PDCCH/PDSCH — S607
- PUSCH/PUCCH — S608

· DL/UL ACK/NACK
· UE CQI/PMI RI REPORT
  USING PUSCH AND PUCCH

# FIG.7

EP 4 746 307 A1

FIG.8

FIRST NODE                    SECOND NODE

1. FIRST SIGNALING

2. PERFORMING OPERATIONS BASED ON AI/ML MODEL

3. SECOND SIGNALING

FIG.9

RECEIVING, FROM THE BASE STATION,
FIRST INFORMATION RELATED TO A FIRST
RESOURCE FOR A PHYSICAL CHANNEL OR
SIGNAL AND SECOND INFORMATION
RELATED TO A FIRST SPATIAL FILTER OR
FIRST TRANSMISSION POWER APPLIED TO
THE FIRST RESOURCE

~ S910

RECEIVING A PHYSICAL CHANNEL OR
SIGNAL BASED ON THE FIRST RESOURCE
FROM THE BASE STATION USING THE FIRST
SPATIAL FILTER OR THE FIRST
TRANSMISSION POWER BASED ON THE
FIRST INFORMATION AND THE SECOND
INFORMATION

~ S920

31

FIG.10

TRANSMITTING, TO THE UE, FIRST
INFORMATION RELATED TO A FIRST
RESOURCE FOR A PHYSICAL CHANNEL OR
SIGNAL AND SECOND INFORMATION
RELATED TO A FIRST SPATIAL FILTER OR
FIRST TRANSMISSION POWER APPLIED TO
THE FIRST RESOURCE

~S1010

TRANSMITTING, TO THE UE, A PHYSICAL
CHANNEL OR SIGNAL BASED ON THE FIRST
RESOURCE USING THE FIRST SPATIAL
FILTER OR THE FIRST TRANSMISSION
POWER BASED ON THE FIRST
INFORMATION AND THE SECOND
INFORMATION

~S1020

FIG.11

## INTERNATIONAL SEARCH REPORT

| International application No. |
| --- |
| **PCT/KR2024/009649** |

| A. | CLASSIFICATION OF SUBJECT MATTER |
| --- | --- |

**H04B 7/06**(2006.01)i; **H04W 72/0446**(2023.01)i; **H04W 72/044**(2023.01)i; **H04W 24/08**(2009.01)i; **H04W 72/231**(2023.01)i; **H04W 72/232**(2023.01)i; **H04L 5/00**(2006.01)i; **G06N 20/00**(2019.01)i

According to International Patent Classification (IPC) or to both national classification and IPC

| B. | FIELDS SEARCHED |
| --- | --- |

Minimum documentation searched (classification system followed by classification symbols)

H04B 7/06(2006.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간 필터(spatial filter), 전송 전력(transmission power), quasi-colocalisation(QCL), 빔(beam), CSI-RS, 인공지능(artificial intelligence, AI) 모델(model), TO(transmission occasion), 유지(maintain)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023-287086 A1 (LG ELECTRONICS INC.) 19 January 2023 (2023-01-19)<br>See paragraphs [0226], [0245] and [0513]; and claims 1 and 7. | 1,7-14 |
| A | | 2-6 |
| A | LG ELECTRONICS. Other aspects on AI/ML for beam management. R1-2305299, 3GPP TSG RAN WG1 #113. Incheon, Korea. 15 May 2023.<br>See sections 2.1-2.5. | 1-14 |
| A | GOOGLE. On Enhancement of AI/ML based Beam Management. R1-2300400, 3GPP TSG RAN WG1 #112. Athens, Greece. 18 February 2023.<br>See section 4.2. | 1-14 |
| A | NVIDIA. AI and ML for beam management. R1-2305163, 3GPP TSG-RAN WG1 Meeting #113. Incheon, Korea. 14 May 2023.<br>See sections 1-3. | 1-14 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 October 2024** | **16 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009649** |

### C. DOCUMENTS CONSIDERED TO BE RELEVANT

| Category* | Citation of document, with indication, where appropriate, of the relevant passages | Relevant to claim No. |
| --- | --- | --- |
| A | VIVO. Other aspects on AI/ML for beam management. R1-2304474, 3GPP TSG RAN WG1 #113. Incheon, Korea. 15 May 2023. See sections 2.5 and 2.7. | 1-14 |

Form PCT/ISA/210 (second sheet) (July 2022)

**INTERNATIONAL SEARCH REPORT**
Information on patent family members

International application No.

**PCT/KR2024/009649**

| Patent document cited in search report | Publication date (day/month/year) | Patent family member(s) | Publication date (day/month/year) |
|---|---|---|---|
| WO 2023-287086 A1 | 19 January 2023 | EP 4373002 A1 | 22 May 2024 |
| | | KR 10-2024-0036036 A | 19 March 2024 |

Form PCT/ISA/210 (patent family annex) (July 2022)